# EUROPÄISCHE PATENTSCHRIFT

(11) **EP 2 871 539 B1**
(45) Veröffentlichungstag und Bekanntmachung des Hinweises auf die Patenterteilung: **17.04.2019**
(21) Anmeldenummer: 13192029.0
(22) Anmeldetag: 07.11.2013
(51) Int. Cl.: G05B 9/02, F24D 3/02, F24D 19/10, G01F 1/34

(54) **Diagnoseverfahren zur Diagnose der korrekten Funktion eines Heizungs- und / oder Kühlsystems**
Diagnosis method for diagnosing the proper operation of a heating system and/or cooling system
Procédé de diagnostic pour le diagnostic du fonctionnement correct d'un système de chauffage et/ou de refroidissement

(43) Veröffentlichungstag der Anmeldung: 13.05.2015
(73) Patentinhaber: Grundfos Holding A/S, 8850 Bjerringbro (DK)
(72) Erfinder: Sørensen, Erik, Baasch, 8850 Bjerringbro (DK); Clausen, Martin, 8850 Bjerringbro (DK)
(74) Vertreter: Patentanwälte Vollmann Hemmer Lindfeld Partnerschaft mbB

(56) Entgegenhaltungen:
- WO-A2-2013/053574
- DE-A1-102007 036 057
- DE-A1-102009 002 746

## Beschreibung

Die Erfindung betrifft ein Diagnoseverfahren zur Diagnose der korrekten Funktion eines Heizungs- und / oder Kühlsystems mit zumindest einem Lastkreis, durch welchen ein Fluid als Wärmeträger strömt sowie eine Verteiler-Einrichtung für ein Heizungs- und / oder Kühlsystem, welche die Anwendung eines solchen Diagnoseverfahrens ermöglicht.

Es sind Heizungs- und / oder Kühlsysteme zur Temperierung von Gebäuden oder Räumen bekannt, welche zumindest einen Lastkreis aufweisen, durch welchen ein Fluid, beispielsweise Wasser, als Wärmeträger strömt. Dieser Wärmeträger transportiert Wasser von einer Wärmequelle in einen zu beheizenden Raum oder fördert das Wasser von einer Kältequelle in einen zu kühlenden Raum. Beispielsweise kann der Lastkreis als Fußbodenheizungskreis ausgebildet sein. Es ist üblich, im Fall, dass mehrere Lastkreise vorhanden sind, diese an einen Verteiler anzuschließen. Bei der Installation bzw. beim Einbau gibt es stets verschiedene Fehlermöglichkeiten, welche später die korrekte Funktion des Systems beeinträchtigen können.

DE 10 2007 036 057 A1 offenbart ein Verfahren zum Auswerten der Leistung eines Steuerventils, wobei nach Einstellung des Steuerventils eine tatsächliche Strömungsrate mit einer erwarteten Strömungsrate verglichen wird.

Im Hinblick auf diese Problematik ist es Aufgabe der Erfindung, ein Diagnoseverfahren bereitzustellen, welches eine Überprüfung der korrekten Funktion eines Heizungs- und / oder Kühlsystems ermöglicht.

Diese Aufgabe wird durch ein Diagnoseverfahren mit den in Anspruch 1 angegebenen Merkmalen sowie durch eine Verteiler-Einrichtung mit den in Anspruch 9 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Diagnoseverfahren ist zur Diagnose der korrekten Funktion eines Heizungs- und / oder Kühlsystems vorgesehen, welches mehrere Lastkreise aufweist, durch welche ein Fluid, beispielsweise Wasser, als Wärmeträger strömt. Dabei strömt das Fluid beispielsweise von einer Wärme- oder Kältequelle durch den Lastkreis in einen zu temperierenden Raum. Der Lastkreis kann dabei beispielsweise im Fußboden des Raumes verlegt sein oder durch andere geeignete Wärmetauscher, wie beispielsweise Heizkörper, geleitet werden.

Ziel des erfindungsgemäßen Diagnoseverfahrens ist es, festzustellen, ob ein Lastkreis korrekt angeschlossen und von dem Fluid durchströmt wird. Dazu ist vorgesehen, zur Diagnose den Öffnungsgrad des zumindest einen Lastkreises, d. h. den Öffnungsgrad eines Regulierelementes in dem Lastkreis zu verändern, so dass sich der Durchfluss durch diesen zu überprüfenden Lastkreis ändert bzw. bei korrekter Funktion ändern müsste.

Vorzugsweise wird der Öffnungsgrad des zumindest einen Regulierelementes in der Weise geändert, dass der Öffnungsgrad vergrößert wird. Dabei wird der Durchfluss durch diesen zu überprüfenden Lastkreis erhöht bzw. bei korrekter Funktion müsste sich der Durchfluss erhöhen. Alternativ ist es ebenfalls möglich, den Öffnungsgrad in der Weise zu verändern, dass der Öffnungsgrad zur Verringerung des Durchflusses verkleinert wird. Dabei würde sich bei korrekter Funktion des Lastkreises der Durchfluss in einem bestimmten Maß verringern.

Nach Veränderung des Öffnungsgrades wird ein Differenzdruck über dem Lastkreis und / oder ein Volumenstrom eines den Lastkreis durchströmenden Fluids erfasst und die so erfassten Werte oder zumindest ein aus diesen abgeleiteter Wert wird mit zumindest einem vorgegebenen Systemgrenzwert verglichen. Der Durchfluss und der Differenzdruck können bevorzugt sehr leicht durch eine Umwälzpumpe, welche das Fluid durch den Lastkreis fördert, erfasst bzw. bestimmt werden. Zur Erfassung des Druckes können geeignete Drucksensoren vorhanden sein. Alternativ und bevorzugt kann der Differenzdruck aus Betriebsparametern der Umwälzpumpe, nämlich beispielsweise der Drehzahl und der aufgenommenen elektrischen Leistung bestimmt werden. Der Differenzdruck über der Umwälzpumpe entspricht dabei dem Differenzdruck zwischen Ein- und Ausgang des zumindest einen Lastkreises. Insbesondere kann bei der Veränderung des Öffnungsgrades auch eine Änderung des Differenzdruckes bzw. des Volumenstromes oder eines aus diesen abgeleiteten Wertes zur Diagnose betrachtet werden. Ein abgeleiteter Wert ist bevorzugt der hydraulische Widerstand, welcher aus dem erfassten Volumenstrom und dem Differenzdruck bestimmt wird.

Bei korrekter Funktion des Heizungs- bzw. Kühlsystems liegen die Werte für den Differenzdruck und / oder den Volumenstrom und insbesondere für den hydraulischen Widerstand bzw. deren zu erwartende Änderungen in für die Anlage vorgegebenen Grenzen. Werden die Werte größer oder kleiner als diese Grenzen, lässt dies auf eine Fehlfunktion schließen. Ist beispielsweise der hydraulische Widerstand zu hoch, spricht dies dafür, dass der Durchfluss durch den Lastkreis in irgendeiner Weise, z. B. durch Luft, blockiert ist. Wenn kein Durchfluss auftritt, spricht dies dafür, dass der Lastkreis vollständig blockiert ist oder ggf. falsch an einen Verteiler angeschlossen ist, so dass ein Durchfluss überhaupt nicht möglich ist. Aus der erfassten Veränderung von Durchfluss und / oder Differenzdruck kann darüber hinaus die korrekte Funktion eines den Öffnungsgrad des Lastkreises verändernden Regulierelementes, z. B. eines Ventils überprüft werden. Bei entsprechenden Abweichungen von dem oder den vorgegebenen Systemgrenzwerten kann erfindungsgemäß eine Fehlermeldung ausgegeben werden, welche den Nutzer oder den Installateur zur Überprüfung des Heizungs- und / oder Kühlsystems veranlassen kann.

Zur Diagnose wird wie beschrieben der Öffnungsgrad des zumindest einen Lastkreises verändert, beispielsweise vergrößert. Dies kann eine Vergrößerung ausgehend von einem vollständig geschlossenen Zustand des Lastkreises sein. Vorzugsweise wird jedoch der Öffnungsgrad zwischen einem Basiswert und einem höheren Wert variiert, da dies eine bessere Diagnose ermöglicht. Wird der Öffnungsgrad durch Verkleinerung des Öffnungsgrades geändert, kann das Regulierventil beispielsweise vollständig geschlossen werden. Bevorzugt wird jedoch auch dabei der Öffnungsgrad zwischen einem Basiswert und einem kleineren Wert, bei welchem das Regulierventil noch nicht vollständig geschlossen ist, variiert.

Da mehrere Lastkreise vorhanden sind, werden zur Diagnose der einzelnen Lastkreise diese nacheinander überprüft. Dazu wird zur Diagnose in der beschriebenen Weise der Öffnungsgrad immer jeweils eines Lastkreises verändert. Die übrigen Lastkreise verbleiben bei ihrem ursprünglichen Öffnungsgrad. Dies erfolgt nacheinander für mehrere, vorzugsweise für alle Lastkreise. So wird jeweils der Öffnungsgrad eines der Lastkreise verändert, während gleichzeitig der Öffnungsgrad der übrigen Lastkreise unverändert bleibt und anschließend wird der Differenzdruck und / oder der Volumenstrom des durch den Lastkreis mit erhöhtem Öffnungsgrad strömenden Fluids erfasst und die erfassten Werte oder zumindest ein aus diesen abgeleiteter Wert werden mit zumindest einem vorgegebenen Systemgrenzwert verglichen. Bevorzugt werden Differenzdruck und Volumenstrom immer für sämtliche Lastkreise gleichzeitig erfasst. Bevorzugt werden der Differenzdruck und / oder der Volumenstrom durch ein Umwälzpumpenaggregat, welches das Fluid durch den Lastkreis, vorzugsweise durch mehrere Lastkreise fördert, erfasst. Wenn sämtliche Lastkreise durch eine gemeinsame Umwälzpumpe mit Fluid versorgt werden, ist der Differenzdruck über die Lastkreise gleich dem Differenzdruck über der Pumpe und kann über diese erfasst werden. Die gerade nicht untersuchten Lastkreise können entweder vollständig verschlossen sein oder auf ihrem zuvor im Betrieb eingestellten Öffnungsgrad verweilen. Dennoch ist ein Vergleich mit vorgegebenen Systemgrenzwerten möglich. Wenn ein Lastkreis zusätzlich geöffnet wird, bevorzugt vollständig geöffnet wird, darf beispielsweise der gesamte hydraulische Widerstand einen gewissen Grenzwert nicht überschreiten.

Für den Fall, dass aus dem erfassten Differenzdruck und dem erfassten Durchfluss ein hydraulischer Widerstand oder dessen Änderung ermittelt wird, wird dieser hydraulische Widerstand oder dessen Änderung vorzugsweise mit einem vorgegebenen Systemgrenzwert oder einer vorgegebenen zu erwartenden Änderung des hydraulischen Widerstandes in der oben beschriebenen Weise verglichen. Wenn der hydraulische Widerstand z. B. über einem vorgegebenen Sollwert bzw. Grenzwert des Systems liegt, spricht dies beispielsweise für eine Blockade im jeweiligen Lastkreis oder einen falschen Anschluss des Lastkreises an einem Verteiler. Besonders bevorzugt wird der hydraulische Widerstand mit einem minimalen und / oder einem maximalen Systemgrenzwert verglichen. So kann auch für den Fall, dass der hydraulische Widerstand zu gering ist, daraus ein Schluss auf eine Fehlfunktion erfolgen.

Wie beschrieben wird bei Überschreiten eines maximalen Systemgrenzwertes und / oder Unterschreiten eines minimalen Systemgrenzwertes bevorzugt eine Fehlermeldung erzeugt, welche dem Nutzer oder Einrichter des Systems zeigt, dass eine Fehlfunktion, welche eine Überprüfung der Anlage bzw. des Systems erfordert, vorliegt.

Neben dem vorangehend beschriebenen Diagnoseverfahren ist auch eine Verteiler-Einrichtung für ein Heizungs- und / oder Kühlsystem mit mehreren Lastkreisen Gegenstand der Erfindung. Die Verteiler-Einrichtung weist eine Steuereinrichtung auf, die so ausgebildet ist, dass sie das vorangehend beschriebene Diagnoseverfahren ausführt. Die erfindungsgemäße Verteiler-Einrichtung weist zumindest ein Umwälzpumpenaggregat bzw. eine Umwälzpumpe zum Fördern eines Fluids durch mehrere parallele Lastkreise auf. Ferner weist die Verteiler-Einrichtung für jeden Lastkreis jeweils ein Regulierelement zum Einstellen des Volumenstromes durch den Lastkreis auf. Durch das Regulierelement kann der Volumenstrom verändert, insbesondere proportional verändert werden. Ferner weist die Verteiler-Einrichtung eine Steuereinrichtung auf, welche mit den Regulierelementen, beispielsweise einem Regulierventil, zu dessen Betätigung verbunden ist. D. h. die Steuereinrichtung kann die Regulierelemente öffnen und schließen und insbesondere den Öffnungsgrad verändern, um den Volumenstrom zu beeinflussen. Ferner ist die Steuereinrichtung mit Erfassungsmitteln zum Erfassen eines Volumenstroms durch den zumindest einen Lastkreis oder mehrere Lastkreise und / oder des Differenzdrucks über dem Lastkreis verbunden. Die Steuereinrichtung ist so ausgebildet, dass sie das oben beschriebene Diagnoseverfahren ausführen kann. Dazu ist die Steuereinrichtung insbesondere derart ausgebildet, dass sie zur Diagnose eines Lastkreises dessen Regulierelement weiter öffnet oder verschließt, um den Durchfluss zu erhöhen oder zu verringern und anschließend über die Erfassungsmittel den Volumenstrom und / oder den Differenzdruck oder die Änderung dieser Werte über dem Lastkreis bzw. im Gesamtsystem erfasst und mit gegebenen Systemgrenzwerten oder zumindest einem vorgegebenen Systemgrenzwert vergleicht. Dazu kann die Steuereinrichtung so ausgebildet sein, dass sie aus den erfassten Werten einen abgeleiteten Wert, beispielsweise den hydraulischen Widerstand, bestimmt und diesen mit einem vorgegebenen, in der Steuereinrichtung gespeicherten Systemgrenzwert vergleicht. Erfindungsgemäß weist die Verteiler-Einrichtung mehrere Regulierelemente auf, welche jeweils zum Einstellen eines Volumenstromes in einem von mehreren Lastkreisen vorgesehen sind, wobei die Steuereinrichtung zur Ansteuerung der mehreren Regulierelemente ausgebildet und mit den Regulierelementen zu deren Ansteuerung signalverbunden ist. Dies ermöglicht es der Steuereinrichtung, die einzelnen Regulierelemente gezielt zu öffnen oder zu schließen bzw. den Öffnungsgrad der einzelnen Regulierelemente gezielt zu vergrößern oder zu verkleinern und gleichzeitig die anderen Regulierelemente zu schließen oder unverändert zu lassen, um nacheinander einzelne Lastkreise in der beschriebenen Weise zu überprüfen. Beispielsweise sind die Regulierelemente als motorisch angetriebene Regulierventile ausgebildet, welche mit der Steuereinrichtung zu ihrer Ansteuerung elektrisch verbunden sind.

Das Umwälzpumpenaggregat ist bevorzugt in einer gemeinsamen Zuleitung zu mehreren, insbesondere allen Lastkreisen gelegen. So dient das Umwälzpumpenaggregat dazu, das Fluid durch die mehreren bzw. alle Lastkreise zu fördern.

Besonders bevorzugt dient das Umwälzpumpenaggregat selber als Erfassungsmittel, wobei das Umwälzpumpenaggregat derart ausgebildet ist, dass es den Differenzdruck über dem Umwälzpumpenaggregat und / oder den Volumenstrom ermittelt. Das Umwälzpumpenaggregat ist mit der Steuereinrichtung zur Übertragung der ermittelten Werte signalverbunden. Besonders bevorzugt ist die Steuereinrichtung in das Umwälzpumpenaggregat integriert, d. h. in einem an dem Umwälzpumpenaggregat angeordneten Elektronikgehäuse angeordnet. Die Steuereinrichtung dient besonders bevorzugt gleichzeitig zur Steuerung bzw. Regelung des Umwälzpumpenaggregates, insbesondere zur Drehzahlregelung. Der Differenzdruck über der Umwälzpumpe kann beispielsweise aus der Drehzahl und der elektrischen Leistungsaufnahme des Umwälzpumpenaggregates bestimmt werden. Auch der Volumenstrom kann aus diesen Betriebsparametern abgeleitet oder über einen separaten Strömungssensor in dem Umwälzpumpenaggregat oder an anderer Stelle in der Anlage erfasst werden.

Nachfolgend wird die Erfindung beispielhaft anhand der beigefügten Figuren beschrieben. In diesen zeigt:
- Fig. 1: schematisch ein Heizungs- oder Kühlsystem, in dem das erfindungsgemäße Regelungsverfahren sowie eine erfindungsgemäße Verteiler-Einrichtung zum Einsatz kommen,
- Fig. 2: in einer schematischen perspektivischen Ansicht einer Verteiler-Einrichtung gemäß der Erfindung,
- Fig. 3: eine Draufsicht auf die Verteilereinrichtung gemäß Fig. 2,
- Fig. 4: die Einschaltdauern eines Lastkreises und
- Fig. 5: schematisch das Zusammenwirken einzelner Teile eines erfindungsgemäßen Regelungsverfahrens.

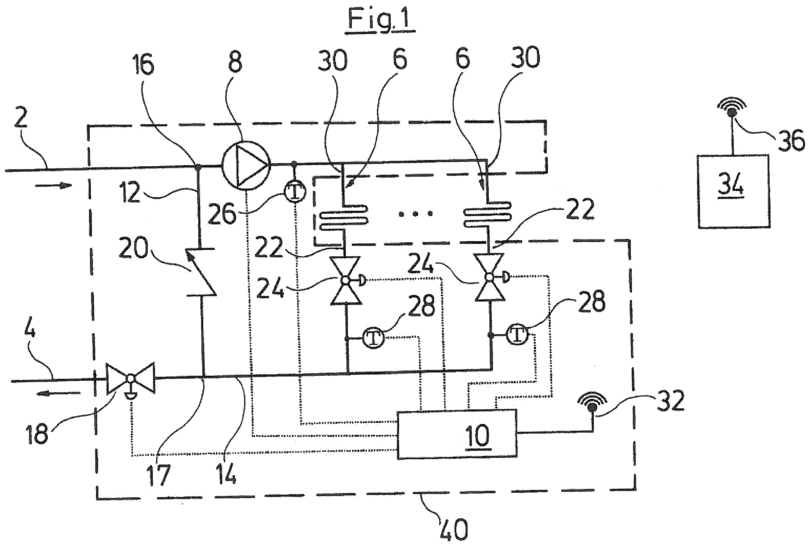

Fig. 1 zeigt ein Heizungs- bzw. Kühlsystem, welches beispielsweise als ein Fußbodenheizungssystem ausgebildet sein kann. Nachfolgend wird die Erfindung am Beispiel eines Heizungssystems beschrieben. Es ist jedoch zu verstehen, dass die Erfindung auch in entsprechender Weise als Kühlsystem verwirklicht werden könnte. Alternativ kann das System auch sowohl zur Heizung als auch zur Kühlung, d. h. beispielsweise im Winter zur Heizung und im Sommer zur Kühlung genutzt werden.

Das in Fig. 1 gezeigte Heizungssystem weist einen Einlass 2 und einen Auslass 4 auf, welche zur Verbindung mit einer Versorgung, d. h. beispielsweise einem Heizkessel, einem Wärmespeicher, einer Kühlanlage etc. vorgesehen sind. Darüber hinaus sind mehrere Lastkreise 6 vorgesehen, welche beispielsweise einzelne Fußbodenheizungskreise darstellen, welche jeweils einen Teilbereich wie z. B. einen Raum eines Gebäudes beheizen. Eingangsseitig, d. h. stromaufwärts der Lastkreise 6 ist eine Umwälzpumpe bzw. ein Umwälzpumpenaggregat 8 angeordnet. Dieses weist einen drehzahlgeregelten Antriebsmotor auf und ist mit einer Steuereinrichtung 10 zur Ansteuerung und insbesondere Drehzahleinstellung verbunden. Die Eingangsseite des Umwälzpumpenaggregates 8 ist mit dem Einlass 2 verbunden.

Stromaufwärts des Umwälzpumpenaggregates 8 ist darüber hinaus eine Mischeinrichtung angeordnet. Die Mischeinrichtung weist eine Mischleitung 12 auf, welche einen Rücklauf 14 von den Lastkreisen 6 mit einem Mischpunkt 16 in dem Strömungsweg von dem Einlass 2 zu der Umwälzpumpe 8 verbindet. D. h. an dem Mischpunkt 16 wird Fluid aus dem Einlass 2 mit Fluid aus dem Rücklauf 14 gemischt, um die Vorlauftemperatur einstellen zu können. Zur Regelung des Mischungsverhältnisses ist in dem Rücklauf 14 stromabwärts des Abzweiges 17 der Mischleitung 12 in dem Rücklauf 14 ein Regulierventil angeordnet, welches ein Mischventil 18 bildet. Dies ist ebenfalls mit der Steuereinrichtung 10 zu seiner Ansteuerung signalverbunden. In der Mischleitung 12 ist darüber hinaus ein Rückschlagventil 20 angeordnet, welches einen Rückfluss von Fluid von dem Mischpunkt 16 in den Rücklauf 14 verhindert. Je nach Öffnungsgrad des Mischventils 18 verändert sich der Volumenstrom, welcher aus dem Rücklauf 14 zu dem Auslass 4 strömt. Wird der Volumenstrom durch Verkleinerung des Öffnungsgrades des Mischventils 18 verkleinert, strömt ein größerer Anteil des Fluids durch die Mischleitung 12 zu dem Mischpunkt 16. Wird der Öffnungsgrad des Mischventils 18 vergrößert, erhöht sich der Volumenstrom durch den Auslass 4 und es strömt entsprechend ein geringerer Teil der Fluidströmung aus dem Rücklauf 14 durch Mischleitung 12 zu dem Mischpunkt 16. So verändert sich der Anteil von Fluid aus dem Rücklauf 14, welcher an dem Mischpunkt 16 dem Fluid aus dem Einlass 2 zugemischt wird. Durch die Mischung des, im Falle eines Heizungssystems, kälteren Fluids aus dem Rücklauf 14 mit dem wärmeren Fluid aus dem Einlass 2, kann die Vorlauftemperatur des Fluids aus dem Einlass 2 gesenkt werden. Im Falle eines Kühlsystems wird umgekehrt wärmeres Fluid aus dem Rücklauf 14 dem kälteren Fluid aus dem Einlass 2 zugemischt, um die Vorlauftemperatur zu erhöhen. Die Umwälzpumpe 8 fördert das Fluid von dem Mischpunkt 16 zu den parallel angeordneten Lastkreisen 6.

An den Ausgängen 22 der Lastkreise, d. h. in deren Rückläufen, ist jeweils ein Regulierventil 24 angeordnet, welches als elektromotorisch angetriebene Regulierventil 24 ausgebildet ist und von der Steuereinrichtung 10 angesteuert wird. Die Regulierventile 24 können in ihrem Öffnungsgrad variiert und auch vollständig geschlossen werden, um den Durchfluss bzw. Volumenstrom durch jeden einzelnen Lastkreis 6 einzustellen. Dabei können die Regulierventile 24 von der Steuereinrichtung 10 individuell angesteuert werden, sodass eine Anpassung des Durchflusses durch jeden einzelnen Lastkreis 6 unabhängig von den übrigen Lastkreisen möglich ist.

In dem gezeigten System sind darüber hinaus Temperatursensoren vorgesehen. Ein erster Temperatursensor ist ein Vorlauftemperatursensor 26 und erfasst die Vorlauftemperatur des Fluids, welches den Lastkreisen 6 zugeführt wird. Darüber hinaus sind an den Ausgängen 22 der Lastkreise 6 Temperatursensoren 28 angeordnet, welche die Austrittstemperaturen des Fluids aus den einzelnen Lastkreisen 6 erfassen. Die von dem Vorlauftemperatursensor 26 und dem Temperatursensoren 28 erfassten Temperaturwerte werden über entsprechende Kommunikationsverbindungen ebenfalls der Steuereinrichtung 10 zugeführt.

Das Umwälzpumpenaggregat 8 ist darüber hinaus ausgebildet, einen Differenzdruck Hₚᵤ zwischen der Eingangsseite und der Ausgangsseite des Umwälzpumpenaggregates 8 zu ermitteln, welcher gleichzeitig dem Differenzdruck zwischen den Eingängen 30 und den Mischpunkt 16, d. h. dem Druckverlust über jeden der durch die Lastkreise 6 definierten Zweige zwischen diesen Punkten entspricht. Ferner ist das Umwälzpumpenaggregat 8 ausgebildet, den Durchfluss durch das Umwälzpumpenaggregat 8 zu bestimmen. Diese vom Umwälzpumpenaggregat 8 erfassten Werte werden über eine Signalverbindung ebenfalls der zentralen Steuereinrichtung 10 zugeführt. Alternativ könnten auch entsprechende Druck- und Durchflusssensoren zusätzlich zu dem Umwälzpumpenaggregat 8 angeordnet werden, um die Druckdifferenz zwischen Ein- und Ausgang der Lastkreise 6 sowie den Durchfluss durch alle Lastkreise 6 zu bestimmen.

Auf Grundlage des Differenzdruckes Hₚᵤ, d. h. dem Druckverlust über den Lastkreisen lässt sich in Kenntnis der Charakteristik der im Strömungsweg liegenden Ventile, insbesondere des Rückschlagventiles 20 und des Regulierventiles 24, darüber hinaus der Volumenstrom durch jeden Lastkreis 6 in Abhängigkeit des Öffnungsgrades des jeweiligen Regulierventiles 24 bestimmen. Da die Steuereinrichtung 10 den Öffnungsgrad der Regulierventile 24 steuert, kann die Steuereinrichtung 10 aus den genannten Werten den Durchfluss bzw. Volumenstrom durch den zugehörigen Lastkreis 6 bestimmen.

So kann, wie unten beschrieben, ein gewünschter Volumenstrom durch den Lastkreis 6 eingestellt werden.

Die Steuereinrichtung 10 ist darüber hinaus mit einer Kommunikationsschnittstelle 32 versehen, welche ausgebildet ist, mit einem oder mehreren Raumthermostaten 34 bzw. Raumtemperaturfühlern 34 zu kommunizieren. Vorzugsweise ist in jedem Raum, welcher von einem Lastkreis 6 temperiert wird, ein solcher Raumthermostat 34 vorgesehen. Im gezeigten Beispiel ist die Kommunikationsschnittstelle 32 als Funkschnittstelle ausgebildet, welche mit einer korrespondieren Funkschnittstelle 36 des Raumthermostates 34 kommuniziert. Alternativ könnte eine Leitungsverbindung über eine separate Signalleitung, ein Bussystem oder eine Powerline-Kommunikation vorgesehen sein. Die Raumthermostate 34 erfassen die Raumtemperaturen in den zu temperierenden Räumen. Darüber hinaus kann über die Raumthermostate 34 in bekannter Weise vom Nutzer jeweils eine Solltemperatur für den zu temperierenden Raum vorgegeben werden.

Die Steuereinrichtung 10 ist zur Anwendung verschiedener Regelungsverfahren ausgebildet. So bewirkt gemäß einem ersten Regelungsverfahren die Steuereinrichtung 10 eine Volumenstromregelung für die einzelnen Lastkreise 6. Dazu wird die Temperaturdifferenz ΔT zwischen dem Eingang 30 und dem Ausgang 22 jedes Lastkreises 6 erfasst. Dies erfolgt über den Vorlauftemperatursensor 26 sowie dem zu dem jeweiligen Lastkreis 6 zugehörigen Temperatursensor 28. In Abhängigkeit dieser Temperaturdifferenz ΔT wird über das Regulierventil 24 dieses Lastkreises 6 der Volumenstrom von der Steuereinrichtung 10 durch Veränderung des Öffnungsgrades V_{pos,n} des Regulierventiles 24 geregelt, bzw. eingestellt, sodass die Temperaturdifferenz ΔT einem vorgegebenen, in der Steuereinrichtung 10 gespeicherten, Sollwert entspricht, d. h., dass ΔT konstant gehalten wird. Dies erfolgt unabhängig für jeden Lastkreis 6, sodass alle Lastkreise durch die Volumenstromregelung an dem tatsächlichen Energiebedarf angepasst werden können. Der Sollwert kann für alle Lastkreise 6 gleich sein oder es können unterschiedliche Sollwerte für einzelne Lastkreise vorgegeben werden. Die Sollwerte sind in der Steuereinrichtung 10 gespeichert.

Dabei wird das Umwälzpumpenaggregat 8 von der Steuereinrichtung 10 so geregelt, dass es einen vorgegebenen Druckdifferenz-Sollwert zwischen Ein- und Ausgang des Umwälzpumpenaggregates einhält. Dieser Differenzdruck wird somit auf einen Druckdifferenz-Sollwert geregelt, welcher ebenfalls von der Steuereinrichtung 10 eingestellt oder vorgegeben wird. Der Druckdiffernez-Sollwert H_{ref} wird von der Steuereinrichtung 10 in Abhängigkeit des Öffnungsgrades der Regulierventile 24 eingestellt. Dazu werden von der Steuereinrichtung 10 sämtliche Öffnungsgrade aller Regulierventile 24 betrachtet. Dasjenige Regulierventil, welches aktuell am weitesten geöffnet ist, d. h. den größten Öffnungsgrad aufweist, wird dann von der Steuereinrichtung 10 der Einstellung des Druckdifferenz-Sollwertes zugrundegelegt. So wird der Öffnungsgrad des Regulierventils, welches am weitesten geöffnet ist, mit einem Soll-Öffnungsgrad V_{pos,ref} verglichen. Wenn der aktuelle Öffnungsgrad V_{pos,n} des Regulierventils 24 mit dem größten Öffnungsgrad den Soll-Öffnungsgrad V_{pos,ref} übersteigt, wird der Druckdifferenz-Sollwert H_{ref} erhöht. Wird der Soll-Öffnungsgrad V_{pos,ref} vom tatsächlichen Öffnungsgrad V_{pos,n} unterschritten, wird der Druckdifferenz-Sollwert H_{ref} entsprechend erniedrigt. Die Erhöhung bzw. Erniedrigung erfolgt bevorzugt proportional zur Abweichung von dem Soll-Öffnungsgrad V_{pos,ref}.

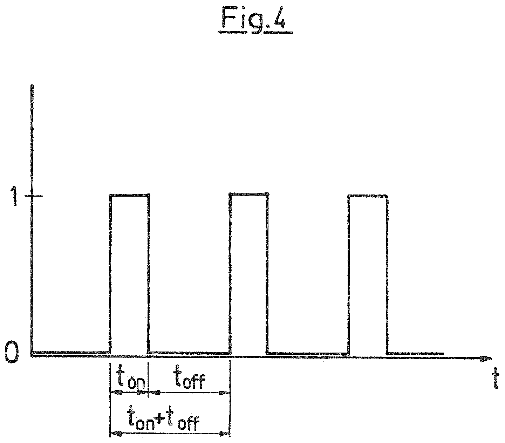

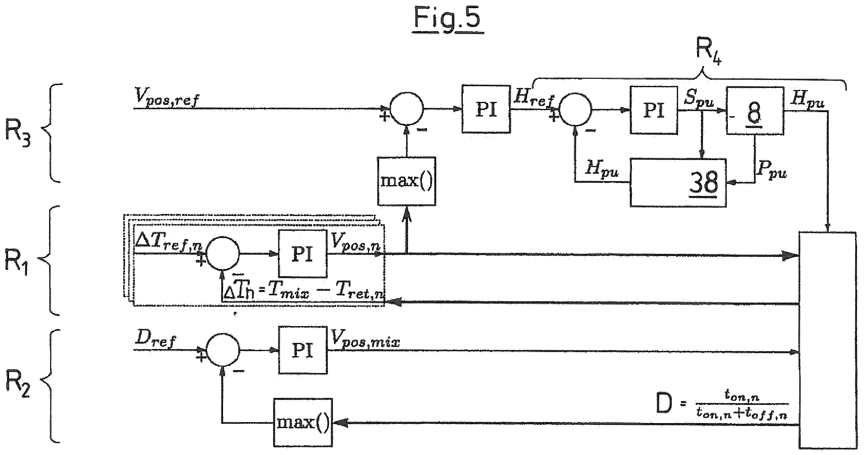

Ein weiterer Regelungskreis bzw. ein weiteres Regelungsverfahren, welches von der Steuereinrichtung 10 durchgeführt wird, betrifft die Regelung der Vorlauftemperatur Tₘᵢₓ am Eingang 30 der Lastkreise 6, welche von dem Vorlauftemperatursensor 26 erfasst wird. Die Vorlauftemperatur Tₘᵢₓ kann von der Steuereinrichtung 10 durch Ansteuerung des Mischventils 18 verändert bzw. eingestellt werden. Dazu bildet die Steuereinrichtung 10 eine Vorlauftemperatur-Einstelleinrichtung, welche die Vorlauftemperatur Tₘᵢₓ, d. h. deren Sollwert, in Abhängigkeit der Einschaltdauer, d. h. der relativen Einschaltdauer D der Lastkreise 6 einstellt. Die Bedeutung der relativen Einschaltdauer D wird anhand von Fig. 4 näher beschrieben. In Fig. 4 ist für einen Lastkreis 4 gezeigt, wie dieser abwechselnd ein- und ausgeschaltet wird. "1" steht dabei für eingeschaltet und "0" für ausgeschaltet. Für die Zeitdauer tₒₙ ist der Lastkreis eingeschaltet, für die Zeitdauer t_{off} ist der Lastkreis ausgeschaltet. Die Zykluszeit t_{z} entspricht dabei der Summe aus Einschaltzeit und Ausschaltzeit, d. h. t_{z} = tₒₙ + t_{off}. Die relative Einschaltdauer D ist das Verhältnis der Einschaltzeit tₒₙ zu der Zykluszeit t_{z}, wie in Fig. 5 dargestellt. Die Zykluszeit bzw. Zyklusdauer t_{z} ist damit die Zeitspanne zwischen dem Einschalten des Lastkreises 6 und dem nachfolgenden nächsten Einschalten des Lastkreises 6. Das Ein- und Ausschalten des Lastkreises ergibt sich aus den Signalen des zugehörigen Raumthermostaten 34. Meldet im Falle eines Heizungssystems der Raumthermostat 34, dass eine eingestellte Soll-Temperatur unterschritten wird, schaltet die Steuereinrichtung 10 den für den Raum zugehörigen Lastkreis 6 durch Öffnen des zugehörigen Regulierventils 24 ein. Dann erfolgt die oben beschriebene Volumenstromregelung für den jeweiligen Lastkreis 6. Meldet der Raumthermostat 34, dass der eingestellte Temperatur-Sollwert erreicht wird, schaltet die Steuereinrichtung 10 den zu diesem Raum zugehörigen Lastkreis 6 durch vollständiges Schließen des Regulierventils 24 ab.

Die Vorlauftemperatur Tₘᵢₓ und deren Sollwert ist für alle Lastkreise 6 gleich und wird von der Steuereinrichtung 10 in Abhängigkeit desjenigen Lastkreises 6 eingestellt, welcher die längste relative Einschaltdauer D, d. h. den relativ größten Lastzyklus aufweist. Dies ist der Lastkreis 6 mit dem größten Wärme- bzw. Kühlbedarf, sodass es zweckmäßig ist, die Vorlauftemperatur Tₘᵢₓ für diesen Lastkreis 6 ausreichend einzustellen. Die übrigen Lastkreise 6, welche geringere relative Einschaltdauern D aufweisen, weisen entsprechend einen geringeren Energiebedarf auf, sodass die eingestellte Vorlauftemperatur Tₘᵢₓ für diese Lastkreise ebenfalls ausreichend ist. Die Einstellung der Vorlauftemperatur Tₘᵢₓ erfolgt in der Weise, dass die relative Einschaltdauer D mit einem Grenzwert bzw. einer Soll-Einschaltdauer D_{ref} verglichen wird. Übersteigt die relative Einschaltdauer D die Soll-Einschaltdauer D_{ref} wird im Falle einer Heizung die Vorlauftemperatur Tₘᵢₓ bzw. zunächst deren Sollwert erhöht und im Fall eines Kühlsystems die Vorlauftemperatur Tₘᵢₓ bzw. deren Sollwert reduziert. Umgekehrt wird für den Fall, dass die relative Einschaltdauer D die Soll-Einschaltdauer D_{ref} unterschreitet, die Vorlauftemperatur Tₘᵢₓ bzw. deren Sollwert im Falle einer Heizung verringert und im Fall eines Kühlsystems erhöht. Dies erfolgt vorzugsweise proportional zu der Abweichung der Einschaltdauer D von der Soll-Einschaltdauer D_{ref}. Alternativ kann auch eine Änderung in festen Schritten erfolgen. Die Soll-Einschaltdauer D_{ref} ist als voreingestellter Wert in der Steuereinrichtung 10 gespeichert.

In Fig. 5 ist gezeigt, wie die einzelnen Regelverfahren bzw. Regelkreise zusammenwirken. Alle die vorangehend beschriebenen Regelkreise bzw. Regelverfahren werden bevorzugt kontinuierlich und gleichzeitig ausgeführt. Die ersten Regelkreise R₁, welche in Fig. 5 gezeigt sind, betreffen die Volumenstromregelung für die einzelnen Lastkreise 6. Dabei erfolgt eine Regelung für jeden Lastkreis 6 unabhängig, d. h. für jeden Lastkreis 6 wird die Differenztemperatur ΔTₙ (ΔTₙ = Tₘᵢₓ - T_{ret,n}, wobei Tret,n die Austrittstemperatur des jeweiligen Lastkreises ist, welche von dem zugehörigen Temperatursensor 28 erfasst wird) mit einem Temperaturdifferenz-Sollwert ΔT_{ref} verglichen. Der Zähler n in Fig. 5 benennt den jeweiligen Lastkreis 6. Auch der Temperaturdifferenz-Sollwert ΔT kann für einzelne Lastkreise 6 unterschiedlich definiert und in der Steuereinrichtung 10 hinterlegt sein. Alternativ ist es auch möglich, für alle Lastkreise denselben Temperaturdifferenzwert ΔT_{ref} zu verwenden. Für die Regelung wird jedoch stets die tatsächliche Austrittstemperatur T_{ret,n} des jeweiligen Lastkreises zugrundegelegt, d. h. für den ersten Lastkreis 6 die Austrittstemperatur Tᵣₑₜ₁, für den zweiten Lastkreis die Austrittstemperatur Tᵣₑₜ₂ usw. In Abhängigkeit des Vergleiches der Differenztemperatur ΔTₙ mit dem Temperaturdifferenz-Sollwert ΔT_{ref} wird der Öffnungsgrad V_{pos,n} für das zugehörige Regulierventil 24 von der Steuereinrichtung 10 vorgegeben.

Ein zweiter Regelkreis R₂, welcher in Fig. 5 dargestellt ist, betrifft die vorangehend beschriebene Einstellung der Vorlauftemperatur Tₘᵢₓ durch Steuerung des Mischventiles 18. Dazu wird eine Stellgröße V_{pos,mix}, welche den Öffnungsgrad des Mischventiles 18 entspricht, von der Steuereinrichtung 10 vorgegeben, indem in oben beschriebener Weise die relative Einschaltdauer D mit der Soll-Einschaltdauer D_{ref} verglichen wird.

Ein dritter Regelkreis R₃ und ein vierter Regelkreis R₄, welche in Fig. 5 gezeigt sind und in der Steuereinrichtung 10 implementiert sind, betreffen die Differenzdruckregelung in dem Umwälzpumpenaggregat 8. So wird der Differenzdruck Hₚᵤ zwischen Ein- und Ausgang des Umwälzpumpenaggregates 8, d. h. zwischen Ein- und Ausgang der Lastkreise 6 auf einen Druckdifferenz-Sollwert H_{ref} geregelt, was in dem Regelkreis R₄ erfolgt. In dem Regelkreis R3 wird ferner der Druckdifferenz-Sollwert H_{ref} seinerseits geregelt bzw. eingestellt, was in der oben genannten Weise in Abhängigkeit des Öffnungsgrades V_{pos,n} des Regulierventils 24 geschieht. Dazu wird das Regulierventil 24 mit dem größten Öffnungsgrad Vₚₒₛ betrachtet und mit einem Soll-Öffnungsgrad V_{pos,ref} verglichen. Wird der Soll- Öffnungsgrad V_{pos,ref} unterschritten, wird proportional der Druckdifferenz-Sollwert H_{ref} erhöht. Wird der Soll-Öffnungsgrad V_{pos,ref} überschritten, wird entsprechend der Druckdifferenz-Sollwert H_{ref} verringert. Wie in Fig. 5 ebenfalls dargestellt, weist das Umwälzpumpenaggregat 8 eine Erfassungseinrichtung 38 auf, welche aus der Drehzahl Sₚᵤ und der elektrischen Leistung Pₚᵤ die tatsächliche Druckdifferenz Hₚᵤ schätzt bzw. ermittelt.

Die vier gezeigten Regelkreise R₁, R₂, R₃, R₄ sind unterschiedlich schnell bzw. unterschiedlich träge, sodass sie bevorzugt nicht miteinander wechselwirken, d. h. sich gegenseitig nicht beeinflussen. Der schnellste Regelkreis ist der Regelkreis R₄, welcher die Druckdifferenz Hₚᵤ über dem Umwälzpumpenaggregat 8 auf den Druckdifferenz-Sollwert H_{ref} regelt.

Der nächstlangsamere Regelkreis ist der Regelkreis R₁, welcher den Volumenstrom durch die einzelnen Lastkreise 6 regelt. Noch langsamer ist der Regelkreis R₃, welcher den Druckdifferenz-Sollwert H_{ref} regelt. Dieser Regelkreis ist so langsam, dass diese Regelung den Regelkreis R₁ bevorzugt nicht beeinflusst. In Fig. 5 nicht dargestellt sind zwei weitere Regelkreise, nämlich der Regelkreis zur Regelung der Raumtemperatur durch Ein- und Ausschalten der Lastkreise 6 sowie der Regelkreis, welcher die Vorlauftemperatur auf dem gewählten Vorlauftemperatur-Sollwert regelt. Diese beiden Regelkreise sind vorzugsweise noch langsamer ausgebildet, als die vorangehend beschriebenen Regelkreise, wobei derjenige Regelkreis, welcher den Vorlauftemperatur-Sollwert einstellt, vorzugsweise der langsamste Regelkreis ist.

Neben den vorangehend beschriebenen Regelungsverfahren kann die Steuereinrichtung 10 weitere Funktionen übernehmen. Da die Steuereinrichtung 10 mit den Raumthermostaten 34 kommuniziert und in Abhängigkeit der Signale von den Raumthermostaten 34 die Lastkreise 6 durch Öffnen der Regulierventile 24 einschaltet, ist es möglich, in der Steuereinrichtung 10 gewisse Prioritäten für einzelne Lastkreise 6 zu hinterlegen. So ist es beispielsweise bei einem Heizungssystem bei großer Kälte möglich, nicht alle Lastkreise 6 gleichzeitig zu aktivieren, falls die von einem Heizkessel zur Verfügung gestellte Wärmemenge dazu nicht ausreichen würde. Zum Aufheizen können zunächst priorisierte Heizkreise, wie beispielsweise für Wohnräume oder Bad eingeschaltet werden und weniger wichtige Lastkreise 6, beispielsweise zum Beheizen von Schlafräumen zunächst ausgeschaltet bleiben. Dabei kann die Steuereinrichtung 10 selbsttätig erfassen, dass die zur Verfügung stehende Heizleistung nicht ausreicht, nämlich dann, wenn alle Regulierventile 34 geöffnet sind, d. h. den maximalen Öffnungsgrad aufweisen und dennoch die Temperaturdifferenz Δ T zwischen Eingang 30 und Ausgang 22 zu groß wird. Umgekehrt funktioniert dies in entsprechender Weise auch bei einem Kühlsystem. Die Priorität der Lastkreise 6 kann voreingestellt und in der Steuereinrichtung 10 hinterlegt sein. Darüber hinaus kann die Steuereinrichtung 10 so ausgebildet sein, dass sie zum Aufheizen von Räumen die Vorlauftemperatur Tₘᵢₓ für eine gewisse Zeit über den üblicherweise gewünschten Sollwert, welcher sich aus der vorangehend beschriebenen Regelung ergibt, erhöht, um ein schnelleres Aufheizen der Räume zu ermöglichen.

Schließlich kann die Steuereinrichtung 10 auch eine Diagnosefunktion bzw. ein Diagnosemodul beinhalten, welches die korrekte Funktion der Regulierventile 24 sowie der Lastkreise 6 diagnostiziert. So kann die Steuereinrichtung 10 in einem Diagnosemodus die Regulierventile 24 der Lastkreise 6 einzeln öffnen bzw. den Öffnungsgrad der Regulierventile 24 vergrößern oder verkleinern, idealerweise auf das Maximum vergrößern. Dabei wird jeweils nur ein Regulierventil 24 ausgehend von einem Ausgangsöffnungsgrad weiter geöffnet oder geschlossen, während die anderen Regulierventile 24 unverändert oder geschlossen bleiben. Bevorzugt wird das Regulierventil 24 des zu überprüfenden Lastkreises 6 weiter geöffnet. Anschließend werden der Durchfluss durch das Umwälzpumpenaggregat 8 sowie der Differenzdruck über dem Umwälzpumpenaggregat 8 erfasst und daraus der hydraulische Widerstand des Systems bzw. eine Änderung des hydraulischen Widerstands bestimmt. Die Steuereinrichtung 10 empfängt auch Informationen bzw. Signale von dem Umwälzpumpenaggregat 8, welche den Durchfluss und den Differenzdruck angegeben. Die Steuereinrichtung 10 vergleicht den ermittelten hydraulischen Widerstand mit einem für das System vorgegebenen und in der Steuereinrichtung 10 gespeicherten maximalen hydraulischen Widerstand. Übersteigt der erfasste hydraulische Widerstand der vorgegebenen maximalen hydraulischen Widerstand, spricht dies für einen Fehler und die Steuereinrichtung 10 signalisiert diesen Fehler, sodass das System anschließend überprüft werden kann. Wenn der hydraulische Widerstand vor und nach dem Öffnen des Regulierventils 24 miteinander verglichen werden, kann darüber hinaus die korrekte Funktion des Regulierventils 24 ermittelt werden. Ferner kann der hydraulische Widerstand in der Steuereinrichtung 10 auch mit einem Minimalwert verglichen werden. Wird ein gespeicherter Minimalwert unterschritten, kann daraus ebenfalls auf eine Fehlfunktion geschlossen werden.

Die beschriebene Diagnosefunktion kann darüber hinaus so verwirklicht sein, dass der Druckverlust und damit der hydraulische Widerstand nur der einzelnen Lastkreise 6 berücksichtigt bzw. von der Steuereinrichtung 10 ermittelt wird. Auch dies kann durch Kenntnis der Charakteristik der im Strömungsweg liegenden Ventile, insbesondere des Rückschlagventils 20 und der Regulierventile 24 unter Berücksichtigung des bekannten Öffnungsgrades der Ventile 24 geschehen. Wenn die Druckverluste der Ventile bei dem gegebenen Betriebszustand bekannt sind, kann so der Anteil des gesamten Druckverlustes, welcher zwischen Ein- und Ausgang der Umwälzpumpe 8 gegeben ist, bestimmt werden, welcher durch den jeweiligen Lastkreis 6 selber verursacht wird. Entsprechend können auch die zulässigen Grenzwerte für den Druckverlust bzw. den hydraulischen Widerstand auf den Lastkreis 6 selber abgestellt werden. D. h. es wird bei dem Vergleich mit den zulässigen Grenzen lediglich der hydraulische Widerstand des Lastkreises berücksichtigt und die Grenzwerte stellen Grenzwerte für den hydraulischen Widerstand des Lastkreises dar.

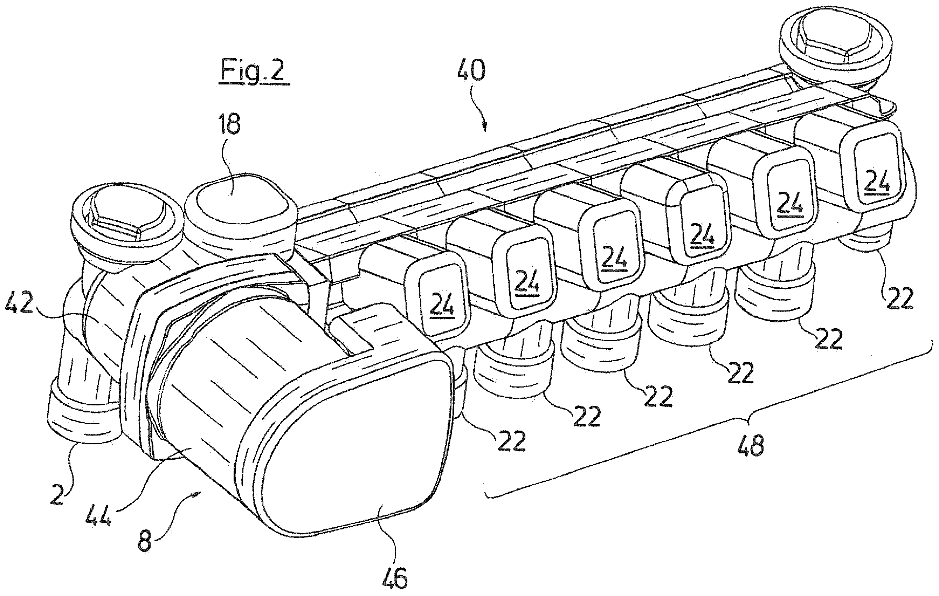

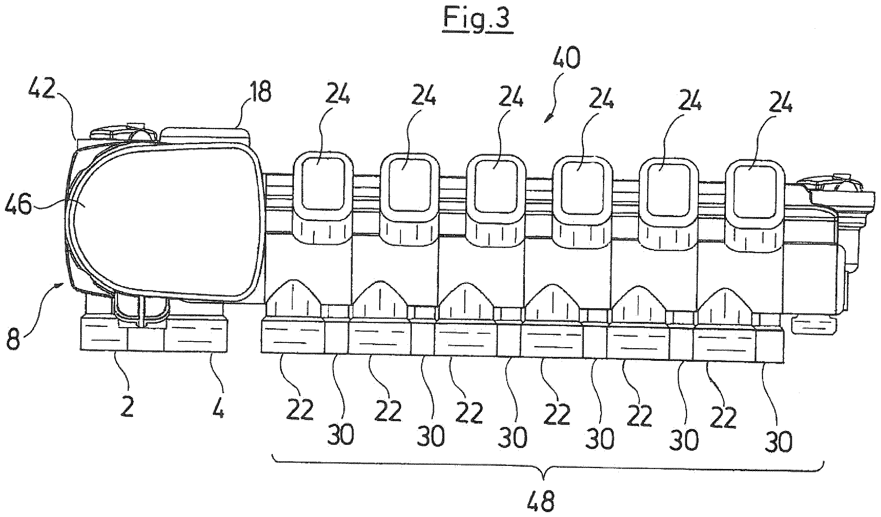

Die wesentlichen Komponenten des in Fig. 1 gezeigten Heizungssystems sind vorzugsweise in eine Verteiler-Einrichtung in Form eines Heizungsverteilers integriert, wie er in Figuren 2 und 3 gezeigt ist. Dabei sind alle wesentlichen innerhalb der gestrichelten Linie in Fig. 1 liegenden Bauteile in die Verteiler-Einrichtung in Form einer Baueinheit integriert. So weist der in Figuren 2 und 3 gezeigte Heizungsverteiler 40 als zentrale Komponente das Umwälzpumpenaggregat 8 auf. Dieses weist ein Pumpengehäuse 42 auf, in welchem ein drehbares Laufrad angeordnet ist. Das Laufrad wird von einem elektrischen Antriebsmotor angetrieben, welcher in einem Motor- bzw. Statorgehäuse 44 angeordnet ist. An dem dem Pumpengehäuse 42 abgewandten Axialende des Statorgehäuse 44 ist ein Klemmenkasten bzw. Elektronikgehäuse 46 angeordnet, in welchem die Steuereinrichtung 10 untergebracht ist. Das Pumpengehäuse 42 weist den Einlass 2 sowie den Auslass 4 in Form von Anschlüssen von externen Rohrleitungen auf. Ferner sind in dem Pumpengehäuse das Mischventil 18 angeordnet und die Mischleitung 12 mit dem Mischpunkt 16 ausgebildet. Das Pumpengehäuse 42 ist an einer Seite mit dem eigentlichen Verteiler 48 verbunden. Der Verteiler 48 weist Module 50 für die einzelnen Lastkreise, in diesem Fall sechs Lastkreise 6, auf. In den Modulen 50 sind die Regulierventile 24 sowie Anschlüsse, welche die Eingänge 30 für die Lastkreise 6 bilden, angeordnet. Ferner weist jedes Modul 50 einen Anschluss auf, welcher den Ausgang 22 für den jeweiligen Lastkreis 6 bildet. An die die Eingänge 30 und die Ausgänge 22 bildenden Anschlüsse können Rohrleitungen, welche die Lastkreise 6 bilden, beispielsweise Rohrleitungen einer Fußbodenheizung angeschlossen werden. In dem Verteiler 48 sind eine Zulauf- und eine Rücklaufleitung angeordnet, welche mit dem Pumpengehäuse 42 verbunden sind, wobei die Rücklaufleitung mit dem Rücklauf 14 in dem Pumpengehäuse und die Zulaufleitung mit der Ausgangsseite der Umwälzpumpe 8 verbunden ist. Auch die Temperatursensoren 26 und 28 sind in den Verteiler 48 bzw. das Pumpengehäuse 42 integriert. So bilden vorzugsweise lediglich die Raumthermostate 34 mit ihren Funkschnittstellen 36 externe Komponenten der Regelungstechnik, welche sich jedoch durch die Funkverbindung leicht mit der ebenfalls in dem Elektronikgehäuse 46 angeordneten Kommunikationsschnittelle 32 der Steuereinrichtung 10 verbinden lassen. Alle anderen erforderlichen elektrischen und/oder elektronischen Bauteile zur Steuerung und/oder Regelung sind in den Heizungsverteiler 40 als eine vorgefertigte Baueinheit integriert.

**Bezugszeichenliste**

| | |
|---|---|
| 2 | - Einlass |
| 4 | - Auslass |
| 6 | - Lastkreise |
| 8 | - Umwälzpumpenaggregat |
| 10 | - Steuereinrichtung |
| 12 | - Mischleitung |
| 14 | - Rücklauf |
| 16 | - Mischpunkt |
| 17 | - Abzweig |
| 18 | - Mischventil |
| 20 | - Rückschlagventil |
| 22 | - Ausgänge |
| 24 | - Regulierventil |
| 26 | - Vorlauftemperatursensor |
| 28 | - Temperatursensoren |
| 30 | - Eingänge |
| 32 | - Kommunikationsschnittstelle |
| 34 | - Raumthermostat |
| 36 | - Funkschnittstelle |
| 38 | - Erfassungseinrichtung |
| 40 | - Heizungsverteiler |
| 42 | - Pumpengehäuse |
| 44 | - Statorgehäuse |
| 46 | - Elektronikgehäuse |
| 48 | - Verteiler |
| | |
| R₁, R₂, R₃, R₄ | - Regelungskreise |
| Tₘᵢₓ | - Vorlauftemperatur |
| T_{ret,n} | - Austrittstemperatur |
| ΔT | - Temperaturdifferenz |
| ΔT_{ref} | - Temperaturdifferenz-Sollwert |
| Hₚᵤ | - Differenzdruck |
| H_{ref} | - Druckdifferenz-Sollwert |
| V_{pos,ref} | - Soll-Öffnungsgrad |
| V_{pos,mix}- | - Öffnungsgrad des Mischventils 18 |
| V_{pos,n} | - Öffnungsgrad des Regulierventils 24 |
| D | - relative Einschaltdauer |
| D_{ref} | - Soll-Einschaltdauer |
| t_{z} | - Zykluszeit |
| tₒₙ | - Einschaltzeit |
| t_{off} | - Ausschaltzeit |
| Sₚᵤ | - Drehzahl |
| Pₚᵤ | - Leistung |

## Patentansprüche

1. Diagnoseverfahren zur Diagnose der korrekten Funktion eines Heizungs- und / oder Kühlsystems mit mehreren Lastkreisen (6), durch welche ein Fluid als Wärmeträger strömt, **dadurch gekennzeichnet, dass** zur Diagnose der Öffnungsgrad (V_{pos,n}) jeweils eines der Lastkreise (6) zur Änderung des Durchflusses nacheinander geändert wird, wobei gleichzeitig der Öffnungsgrad (V_{pos,n}) der übrigen Lastkreise (6) unverändert bleibt und anschließend ein Differenzdruck (Hₚᵤ) und / oder ein Volumenstrom des durch den Lastkreis (6) mit erhöhtem Öffnungsgrad (V_{pos,n}) strömenden Fluides erfasst werden und die erfassten Werte oder zumindest ein aus diesen abgeleiteter Wert mit zumindest einem vorgegebenen Systemgrenzwert verglichen werden.

2. Diagnoseverfahren nach Anspruch 1, **dadurch gekennzeichnet, dass** der Öffnungsgrad (V_{pos,n}) des Lastkreises (6) in der Weise verändert wird, dass der Öffnungsgrad (V_{pos,n}) zur Erhöhung des Durchflusses vergrößert wird.

3. Diagnoseverfahren nach Anspruch 1, **dadurch gekennzeichnet, dass** der Öffnungsgrad (V_{pos,n}) des Lastkreises (6) derart geändert wird, dass er zur Verringerung des Durchflusses verkleinert wird.

4. Diagnoseverfahren nach einem der vorangehenden Ansprüche, **dadurch gekennzeichnet, dass** der Differenzdruck (Hₚᵤ) und / oder der Volumenstrom durch ein Umwälzpumpenaggregat (8), welches das Fluid durch den Lastkreis (6) fördert, erfasst werden.

5. Diagnoseverfahren nach einem der vorangehenden Ansprüche, **dadurch gekennzeichnet, dass** aus dem erfassten Differenzdruck (Hₚᵤ) und Volumenstrom ein hydraulischer Widerstand für den geöffneten Lastkreis (6) als abgeleiteter Wert bestimmt wird.

6. Diagnoseverfahren nach Anspruch 5, **dadurch gekennzeichnet, dass** der hydraulische Widerstand mit zumindest einem vorgegebenen Systemgrenzwert für den hydraulischen Widerstand verglichen wird.

7. Diagnoseverfahren nach Anspruch 6, **dadurch gekennzeichnet, dass** der hydraulische Widerstand mit einem minimalen und / oder einem maximalen Systemgrenzwert verglichen wird.

8. Diagnoseverfahren nach einem der vorangehenden Ansprüche, **dadurch gekennzeichnet, dass** bei Überschreiten eines maximalen Systemgrenzwertes und / oder Unterschreiten eines minimalen Systemgrenzwertes eine Fehlermeldung erzeugt wird.

9. Verteiler-Einrichtung für ein Heizungs- und / oder Kühlsystem mit mehreren Lastkreisen (6), wobei die Verteiler-Einrichtung (40) zumindest ein Umwälzpumpenaggregat (8) zum Fördern eines Fluids durch die Lastkreise (6) sowie mehrere Regulierelemente (24) aufweist, welche jeweils zum Einstellen des Volumenstromes durch einen der mehreren Lastkreise (6) vorgesehen sind, **gekennzeichnet durch** eine Steuereinrichtung (10), welche mit den Regulierelementen (24) zu deren Betätigung und Ansteuerung signalverbunden ist sowie mit Erfassungsmitteln (8) zum Erfassen eines Volumenstromes durch die Lastkreise (6) und / oder des Differenzdruckes (Hₚᵤ) über dem Lastkreis (6) verbunden ist und derart ausgebildet ist, dass sie ein Diagnoseverfahren gemäß einem der vorangehenden Ansprüche ausführt.

10. Verteiler-Einrichtung nach Anspruch 9, **dadurch gekennzeichnet, dass** das Umwälzpumpenaggregat (8) in einer gemeinsamen Zulaufleitung zu allen Lastkreisen (6) gelegen ist.

11. Verteiler-Einrichtung nach einem der Ansprüche 9 oder 10, **dadurch gekennzeichnet, dass** als Erfassungsmittel das Umwälzpumpenaggregat (8) fungiert, welches derart ausgebildet ist, dass es den Differenzdruck (Hₚᵤ) über dem Umwälzpumpenaggregat (8) und / oder den Volumenstrom ermittelt, und mit der Steuereinrichtung (10) zur Übertragung der ermittelten Werte signalverbunden ist.

## Claims

1. A diagnosis method for the diagnosis of the correct function of a heating and/or cooling system with several load circuits (6), through which a fluid flows as a heat transfer medium, **characterised in that** for the diagnosis, the opening degree (V_{pos,n}) of each one of the load circuits (6) is successively changed for changing the flow, wherein simultaneously the opening degree (V_{pos,n}) of the remaining load circuits (6) remains unchanged and subsequently a differential pressure (Hₚᵤ) and/or a volume flow of a fluid which flows through the load circuit (6) with the increased opening degree (V_{pos,n}) are detected and the detected values or at least a value which is derived from these are compared to at least one predefined system limit value.

2. A diagnosis method according to claim 1, **characterised in that** the opening degree (V_{pos,n}) of the load circuit (6) is changed in a manner such that the opening degree (V_{pos,n}) is increased for increasing the flow.

3. A diagnosis method according to claim 1, **characterised in that** opening degree (V_{pos,n}) of the load circuit (6) is changed in a manner such that it is reduced for reducing the flow.

4. A diagnosis method according to one of the preceding claims, **characterised in that** the differential pressure (Hₚᵤ) and/or the volume flow through a circulation pump assembly (8) which delivers the fluid through the load circuit (6) are detected.

5. A diagnosis method according to one of the preceding claims, **characterised in that** a hydraulic resistance for the opened load circuit (6) is determined as a derived value from the detected differential pressure (Hₚᵤ) and the volume flow.

6. A diagnosis method according to claim 5, **characterised in that** the hydraulic resistance is compared to at least one predefined system limit value for the hydraulic resistance.

7. A diagnosis method according to claim 6, **characterised in that** the hydraulic resistance is compared to a minimal and/or a maximal system limit value.

8. A diagnosis method according to one of the preceding claims, **characterised in that** an error message is produced on exceeding a maximal system limit value and/or falling short of a minimal system limit value.

9. A manifold device for a heating and/or cooling system with several load circuits (6), wherein the manifold device (40) comprises at least one circulation pump assembly (8) for delivering a fluid through the load circuits (6), as well as several regulating elements (24) which are each provided for setting the volume flow through one of the several load circuits (6), **characterised by** a control device (10) which is signal-connected to the regulating elements (24) for their actuation and activation as well with detecting means (8) for detecting a volume flow through the load circuits (6) and/or a differential pressure (Hₚᵤ) across the load circuit (6) and is designed in a manner such that it carries out a diagnosis method according to one of the preceding claims.

10. A manifold device according to claim 9, **characterised in that** the circulation pump assembly (8) is situated in a common feed conduit to all load circuits (6).

11. A manifold device according to one of the claims 9 or 10, **characterised in that** the circulation pump assembly (8) functions as detecting means and is designed in a manner such that it determines the differential pressure (Hₚᵤ) across the circulation pump assembly (8) and/or the volume flow, and is signal-connected to the control device (10) for transferring the determined values.

## Revendications

1. Procédé de diagnostic pour diagnostiquer le fonctionnement correct d'un système de chauffage et/ou de refroidissement à plusieurs circuits de charge (6) à travers lesquels un fluide circule en tant que fluide caloporteur, **caractérisé en ce que**, pour le diagnostic, le degré d'ouverture (V_{pos,n}) de chacun des circuits de charge (6) est successivement modifié pour obtenir une modification de son débit, le degré d'ouverture (V_{pos,n}) des autres circuits de charge (6) restant simultanément inchangé, puis une pression différentielle (Hₚᵤ) et/ou un débit volumique du fluide qui s'écoule dans le circuit de charge (6) avec un degré d'ouverture (V_{pos,n}) accru étant détecté(s) et les valeurs détectées ou au moins une valeur dérivée desdites valeurs étant comparée(s) à au moins une valeur limite de système prédéterminée.

2. Procédé de diagnostic selon la revendication 1, **caractérisé en ce que** le degré d'ouverture (V_{pos,n}) du circuit de charge (6) est modifié de manière à augmenter le degré d'ouverture (V_{pos,n}) pour augmenter le débit.

3. Procédé de diagnostic selon la revendication 1, **caractérisé en ce que** le degré d'ouverture (V_{pos,n}) du circuit de charge (6) est modifié de manière à être réduit pour réduire le débit.

4. Procédé de diagnostic selon l'une des revendications précédentes, **caractérisé en ce qu'**est/que sont détecté(s) la pression différentielle (Hₚᵤ) et/ou le débit volumique à travers un agrégat de pompe de circulation (8) qui transporte le fluide dans le circuit de charge (6).

5. Procédé de diagnostic selon l'une quelconque des revendications précédentes, **caractérisé en ce que**, à partir de la pression différentielle (Hₚᵤ) et du débit volumique détectés, une résistance hydraulique est déterminée en tant que valeur dérivée pour le circuit de charge (6) ouvert.

6. Procédé de diagnostic selon la revendication 5, **caractérisé en ce que** la résistance hydraulique est comparée à au moins une valeur limite de système prédéterminée pour la résistance hydraulique.

7. Procédé de diagnostic selon la revendication 6, **caractérisé en ce que** la résistance hydraulique est comparée à une valeur limite de système minimale et/ou maximale.

8. Procédé de diagnostic selon l'une des revendications précédentes, **caractérisé en ce qu'**un message d'erreur est généré en cas de dépassement d'une valeur limite de système maximale et/ou en cas de passage en dessous d'une valeur limite de système minimale.

9. Dispositif répartiteur pour système de chauffage et/ou de refroidissement à plusieurs circuits de charge (6), le dispositif répartiteur (40) présentant au moins un agrégat de pompe de circulation (8) destiné à déplacer un fluide à travers les circuits de charge (6), ainsi que plusieurs éléments de régulation (24) prévus respectivement pour ajuster le débit volumétrique dans l'un parmi la pluralité de circuits de charge (6), **caractérisé par** un dispositif de commande (10) qui est relié aux éléments de régulation (24) par des signaux en vue de leur actionnement et de leur commande, et est également relié à un moyen de détection (8) destiné à détecter un débit volumique dans les circuits de charge (6) et/ou la pression différentielle (Hₚᵤ) au sein du circuit de charge (6), et réalisé de manière à mettre en oeuvre un procédé de diagnostic selon l'une des revendications précédentes.

10. Dispositif répartiteur selon la revendication 9, **caractérisé en ce que** l'agrégat de pompe de circulation (8) est situé dans une conduite d'alimentation commune à tous les circuits de charge (6).

11. Dispositif répartiteur selon l'une des revendications 9 ou 10, **caractérisé en ce que** l'agrégat de pompe de circulation (8) remplit une fonction de moyen de détection réalisé de manière à déterminer la pression différentielle (Hₚᵤ) au sein de l'agrégat de pompe de circulation (8) et/ou le débit volumique, et est relié par signaux au dispositif de commande (10) pour transmettre les valeurs déterminées.
